(19)

Europäisches Patentamt

European Patent Office

Office européen des brevets

(11) **EP 3 185 430 B1**

(12) **EUROPEAN PATENT SPECIFICATION**

(45) Date of publication and mention of the grant of the patent:
**13.03.2019 Bulletin 2019/11**

(21) Application number: **15833923.4**

(22) Date of filing: **01.06.2015**

(51) Int Cl.:
**H04B 3/54** (2006.01)

(86) International application number:
**PCT/CN2015/080511**

(87) International publication number:
**WO 2016/026342 (25.02.2016 Gazette 2016/08)**

(54) **POWER-LINE CARRIER COMMUNICATION METHOD**

VORRICHTUNG FÜR STROMLEITUNGSTRÄGERKOMMUNIKATION

PROCÉDÉ DE COMMUNICATION PAR COURANTS PORTEURS EN LIGNE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.08.2014 CN 201410418514**

(43) Date of publication of application:
**28.06.2017 Bulletin 2017/26**

(73) Proprietors:
- **State Grid Corporation of China**
  **Beijing 100031 (CN)**
- **China Electric Power Research Institute**
  **Beijing 100192 (CN)**
- **State Grid Smart Grid Research Institute**
  **Beijing 102211 (CN)**
- **State Grid Zhejiang Electric Power Company**
  **Zhejiang 310007 (CN)**
- **State Grid Shaoxing Power Supply Company**
  **Shaoxing, Zhejiang 312000 (CN)**

(72) Inventors:
- **LIU, Weilin**
  **Beijing 102211 (CN)**
- **AN, Chunyan**
  **Beijing 102211 (CN)**
- **LI, Jianqi**
  **Beijing 102211 (CN)**
- **GAO, Hongjian**
  **Beijing 102211 (CN)**
- **YANG, Bing**
  **Beijing 102211 (CN)**
- **ZHAO, Yong**
  **Beijing 102211 (CN)**
- **ZHAO, Tao**
  **Beijing 102211 (CN)**
- **LU, Yang**
  **Beijing 102211 (CN)**
- **TAO, Feng**
  **Beijing 102211 (CN)**
- **CHU, Guangbin**
  **Beijing 102211 (CN)**
- **MA, Ping**
  **Beijing 102211 (CN)**

(74) Representative: **Boüan du Chef du Bos, Louis-Paterne**
**Cabinet Bouan**
**34, rue de Bagneaux**
**45140 Saint Jean de la Ruelle (FR)**

(56) References cited:
**CN-A- 101 569 190      CN-A- 101 800 630**
**CN-A- 104 301 009      US-A1- 2012 320 931**
**US-A1- 2014 105 313**

## Description

### Field of the Invention

The present invention relates to a method in the field of a low and medium voltage power line access network, and in particular to a power-line carrier communication method.

### Background of the Invention

Typical applications of smart grid in medium and low voltage access network generally employ centralized master-slave network architecture. In order to facilitate synchronization and establishment of communication connection between slave stations and a master station, the master station generally defines the media access control (Media Access Control, MAC) frame structure and periodically sends a beacon signal at the start of each MAC frame. In addition, each physical layer (Physical, PHY) data burst typically starts with a preamble for the burst and timing synchronization. Since a successful detection of a preamble is essential for a correct detection of subsequent data within a burst, a preamble shall be much robust against power line channel effects than the modulated data. PRIME uses a chirp signal as a preamble for this purpose. The chirp signal has a very good autocorrelation function. Other PLC systems, e.g. OPERA, HOMEPLUG and G3, use known OFDM symbols to serve the "preamble purpose". The invention with application No. 201310478479.5 further provides a special designed preamble sequence as well as algorithms for a reliable detection of a preamble in a power line channel with strong impulsive noise, narrowband interference and multipath fading, etc. The channel condition of power line communication can be very poor due to attenuation, multipath propagation, impulsive noise, narrowband interference and so on. Besides, most of the interference is time-varying. As a result, it is a huge challenge to design a robust PLC system which is suitable for different network scenarios with a-priori unknown channel conditions. OFDM is a commonly used modulation technology in the PLC system due to its inherent capability to cope with multipath propagation and its robustness against narrow band interferer. In addition to OFDM, powerful forward error correction schemes together with interleaving are common approaches to cope with errors caused by power line channels. PRIME uses a convolutional code with ½ rate and constraint length of 7. G3 uses a concatenated Reed-Solomon code and a convolutional code. OPERA uses a 4 dimensional trellis coded modulation scheme. HomePlug uses a turbo code. To further enhance the robustness of the transmission, several PLC systems, e.g. Home-Plug, G3, further employ the so-called repetition code, in which each bit after the FEC encoder is simply repeated several times (factor 4 or 6 in G3) before entering the modulator. The repetition code can further increase the bit energy and hence the margin of the signal against interference. OPERA uses a similar approach, in which all sub-carriers use the most robust modulation scheme and multiple sub-carriers carry the same information in order to increase the robustness of the signal in difficult link.

Kim IL HAN, et al (US 2014/105313 A1) discloses embodiments include methods of powerline communications using a preamble with band extension is provided. A method may include receiving a packet data unit PDU. Bit-level repetition is applied to at least a portion of the PDU to create a repeated portion. Interleaving is performed per a subchannel. Pilot tones are inserted in the interleaved portion. Each data tone is modulated with respect to a nearest one of the inserted pilot tones. The PDU is transmitted over a power line.

The robustness of all those systems described above is enhanced through adding the redundancy while keeping the same modulation and coding scheme, which is almost equivalent to reducing the forward error correction (FEC) code rate. However, the performance gain obtained by adding the redundancy is often not sufficient in case of extremely harsh channel conditions of the power line. Therefore, it is necessary to provide a power-line carrier communication method which can be applied to situations in which the default communication including the above mentioned repetition technique fails but low data rate communication is still required to maintain the basic communication of the network.

### Summary of the Invention

To overcome the aforementioned shortcomings, the present invention provides a power-line carrier communication method which can be applied to a situation in which the default communication fails but low data rate communication is still needed to maintain the basic communication of the network.

To achieve the aforementioned objective, the present invention proposes to use a default communication mode and a robust communication mode, where in the robust communication mode the data is communicated by transmission and reception of on-off keying of the preamble signal. The detailed technical solutions are described in the following steps:

I. A master station defines an MAC frame, a beacon signal, an MAC superframe and a robust communication mode enable signal, sends the beacon signal at the start of the MAC frame, and sends a "robust communication mode enable" signal after the initial beacon signal of the MAC superframe;

II. A slave station attempts to communicate with the master station in a conventional communication mode (default mode), step III is executed in the case of success, and otherwise, step IV is executed;

III. The slave station calculates an error rate of the detection of a preamble signal in the received beacon signal, and in case the default communication mode can not work, if the error rate of the preamble signal is less than a predefined threshold, step IV is executed;

IV. The slave station attempts to enter the robust communication mode, and in the case of success, the data communication is carried out by using the on-off keying of the preamble signal and step V is executed;

V. In the robust mode, the master station periodically sends the beacon signal as in the conventional communication mode, the slave station determines whether the conventional communication mode is feasible according to a predefined criterion, and if the conventional communication mode is feasible, the master station selects the default communication mode.

Further, in the step I, the beacon signal contains the preamble signal and an OFDM symbol carrying control information; and MAC frame contains a time slot for the transmission of the beacon signal and a reserved time slot for transmitting communication data.

The MAC superframe includes a transmission time of the beacon signal, a transmission time of the robust communication mode enable signal, a time reserved for the slave station to send a mode switch request of switching from the conventional communication mode to the robust communication mode and for the master station to confirm the mode switch request, and a plurality of MAC frames.

The duration of a MAC frame is the sum of the transmission time of the beacon signal, the transmission time of the robust communication mode enable signal and the time reserved for the slave station to send the mode switch request and for the master station to confirm the mode switch request.

Further, the step II includes the following steps: the slave station is power on, detects the beacon signal and synchronizes with the master station; and if the slave station detects the preamble signal and the OFDM symbol in the beacon signal, the communication is successful, the communication is carried out in the conventional communication mode, and the step III is executed; and if the slave station detects the preamble signal in the beacon signal but cannot detect the OFDM symbol, the step IV is executed.

Further, in the step III, in the conventional communication mode, the slave station continuously calculates the error rate of the preamble signal in the beacon signal which indicates the communication reliability of the robust communication mode. In the case that the conventional communication mode is failed, but the error rate of the preamble signal is below a threshold, then the station suggests to enter the robust communication mode and the step IV is executed.

Further, the step IV includes the following steps: if the master station fails to establish communication with the slave station through the conventional communication mode, the slave station detects the robust communication mode enable signal at the start of the MAC super-frame and sends a robust communication mode switch request control packet; the master station receives the robust communication mode switch request control packet sent by the slave station, and responds with a confirmation control packet through the robust communication mode. After this process, the master station and the slave station exchange data information through the robust communication mode.

Further, in the robust communication mode, the master station continues to periodically send the beacon signal, and the slave station detects the beacon signal to evaluate link quality for the conventional communication mode.

When both the conventional and robust communication modes are feasible, the master station determines which mode shall be used or even decides to use both communication modes simultaneously.

Further, the master station periodically sends the beacon signal, and the slave station receives the beacon signal to synchronize with the master station and establishes a communication relationship with the master station.

In the conventional communication mode, the master station communicates with the slave station through PHY Data burst including the preamble signal and the OFDM symbol. The data carried in the OFDM symbol is protected by forward error correction and cyclic redundancy check. In the robust communication mode, the master station and the slave station transmit data by the on-off keying of the preamble signal. Without the loss of generality, a presence of the preamble signal represents binary data 1, and an absence of the preamble signal represents binary data 0. Further, the PHY data includes a PHY header containing PHY control information and a PHY load containing upper layer application data. The PHY data is encoded with a convolutional code.

**Compared with the prior art, the present invention has the following beneficial effects:**

1. The present invention provides a very simple robust communication mode, which can provide low data rate reliable communication when the default communication mode cannot work reliably, in order to meet the basic communication requirements of the network. It introduces a MAC superframe. The MAC frame defines slots for the sending of "robust communication mode enable" signal and defines time slots for the master station and slave station to change information to facilitate the switching between communication modes.

2. The detection of presence or absence (on-off keying) of the preamble signal is much easier than the decoding of information carried in the OFDM symbol, so the communication through the on-off keying of preamble signal can work reliably in much worse PLC communication environment. Therefore the robust communication mode in the present invention can greatly enhance the robustness.

3. In the method provided by the present invention, preamble detection and evaluation are a part of work in the default communication mode anyway, hence the preparation for entering the robust mode causes almost no additional overhead; in addition, the additional protocol overhead necessary for the switching between the two communication modes is also very small, so almost no additional resource is needed for the provision of the two communication modes.

4. In the method provided by the present invention, in the robust communication mode, the link quality of the default communication mode is still periodically evaluated, so that switching back to the default communication mode can be performed when the link quality becomes good.

5. The robustness of the method provided in the present invention is very strong, and the method is simple to implement. The robust communication mode can be used in multiple network scenarios and is used for transmitting short but very important information when necessary to maintain the normal operation of the network.

6. The robust communication mode provided by the present invention has very important significance for slave stations with farther distances and without potential relay stations, and can provide low data rate reliable communication services forthose stations to expand the coverage of the network.

7. The communication method involved in the present invention can be applied to networks using preamble signals for timing and synchronization, and can also be applied to networks using other robust signals for timing and synchronization.

## Brief Description of the Drawings

Fig. 1 is the MAC frame structure defined by master station in the embodiment;
Fig. 2 is the PHY data burst in default communication mode in the embodiment;
Fig. 3 is the process that master station and slave station enter into robust communication mode in the embodiment;
Fig. 4 is an example diagram of a binary sequence indication represented by on-off keying of preamble signals in the embodiment;
Fig. 5 is an example diagram of PHY data burst structure in the robust communication mode in the embodiment;
Fig. 6 is a flowchart of the power-line carrier communication method of the present invention.

## Detailed Description of the Embodiments

The present invention will be further illustrated below in combination with the accompany drawings.

The present invention provides a power-line carrier communication method. The method includes a low data rate robust communication method based on the detection of a preamble sequence. The robust communication method provides an alternative communication mode when the default communication mode cannot provide effective communication in harsh channel environments.

In the power line communication, two communication nodes are required to complete time synchronization on one or more frequencies at first. To achieve the aforementioned purpose, one node needs to send a beacon signal on one or more frequencies, the other node needs to detect the beacon signal. The node sending the beacon signal is denoted as master station, and the other node is denoted as slave station. After synchronization, the master station and the slave station can transmit data packets to each other.

The method provided by the present invention includes a default communication mode, and the default communication mode is meant as follows:

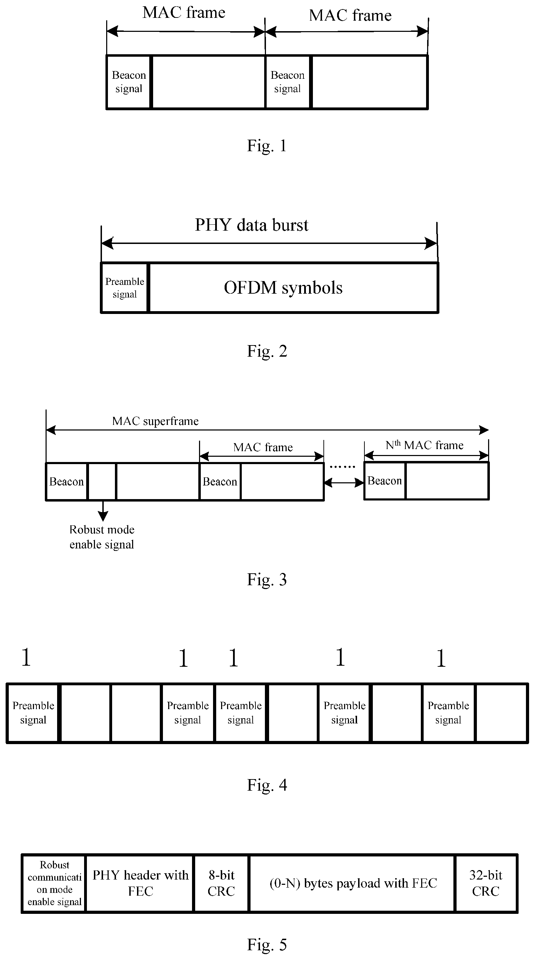

Firstly, the unconnected slave station detects the preamble signal in the beacon to synchronize with the master station; then, the slave station detects the OFDM symbol following the preamble signal and demodulates corresponding MAC control information therein; and then the slave station needs to send a registration request control packet to the master station to start network registration process. If the link quality is good enough, the master station and the slave station can establish reliable communication and exchange data by PHY (physical layer) data burst. Fig. 2 shows the PHY data burst in the default communication mode in the embodiment. The PHY data burst includes a preamble signal and one or more OFDM signals.

The method of the present invention further includes a robust communication mode. The robust communication mode provides an alternative communication mode when the default communication mode cannot provide effective communication in harsh channel environments. In the robust communication mode, the synchronization between the master station and the slave station is carried out at first. Then the master station and the slave station can establish reliable communication and exchange data by using on-off keying of the preamble signal.

In the embodiment, the robust communication mode achieves synchronization and data transmission based on a preamble sequence and its processing method thereof. The robust communication mode is to carry out a normalized operation based on a windowing function, and then carry out autocorrelation calculation by using a preamble sequence to fight against the influence of narrowband interference, noise, nonlinearity and other factors.

The aforementioned preamble sequence includes two symmetrical and partially overlapped sub-sequences, and the two sub-sequences are obtained by a search algorithm and have superior autocorrelation and cross-correlation properties. In addition, Nyquist window function is applied to each sub-sequence to reduce the out-of-band energy of the preamble sequence.

The processing of the preamble sequence includes: converting the received signal into a baseband signal by an analog-to-digital converter and an digital I/Q demodulator; carrying out Fourier transform to obtain a frequency domain signal; a narrowband interference detection module is used to estimate the number, power, central frequency, bandwidths and attenuation of narrowband interference signals, which are used to configure parameters of an adaptive filter to cancel the narrow band interference; a normalization process based on a window function is applied to each input sampling point before performing autocorrelation. An accurate start time of the baseband signal is obtained through a comparator and a post-processor.

In the power line communication network, the master station periodically sends the beacon signal carrying the preamble signal, and the slave station can synchronize and establish a communication connection with the master station accordingly. The aforementioned mechanism enables the slave station to periodically detect the preamble signal and evaluate the link quality for the robust communication mode. If the link quality of the robust communication mode is better, the slave station can request to use the robust communication mode.

To further enhance the reliability of the robust communication mode, the present invention uses forward error correction (FEC) and cyclic redundancy check (CRC).

The master station and the slave station need some special signaling to enter the robust communication mode. Without the loss of generality, the method of the present invention proposes that the slave station initiates the process and sends a robust communication mode switch request.

The master station also defines an MAC superframe for mode switch on the basis of MAC frame.

The MAC frame includes a transmission time for the beacon signal and a reserved time for communication data.

The MAC superframe includes a transmission time for the beacon signal, a transmission time for the robust communication mode enable signal, a transmission time reserved for the slave station to send a mode switch request. Also the master station uses that reserve time to confirm the mode switch request.

The beacon signal includes a preamble signal and an OFDM signal. Both the preamble signal and the robust communication mode enable signal are specially designed signals containing 384 sampling points with different amplitudes and phases.

The master station sends the beacon signal at the start of the MAC frame, sends the robust communication mode enable signal after the initial beacon signal of the MAC superframe, a special time slot is located behind the robust communication mode enable signal, and the slave station can send the mode switch request for the switching from the default communication mode to the robust communication mode through the special time slot.

Fig. 3 shows an MAC superframe structure, including the transmission time for the beacon signal, the transmission time for the robust communication mode enable signal, the time reserved in which the slave station can send the mode switch request for the switching from the default communication mode to the robust communication mode and also for the master station to confirm the mode switch request. The sum of the transmission time for the beacon signal, the transmission time for the robust communication mode enable signal, the transmission time reserved in which the slave station can send the mode switch request and the master station can confirm the mode switch request, is equal to the duration of a MAC frame.

If the slave station decides to use the robust communication mode, the slave station detects the robust communication mode enable signal at first, and then sends a robust communication mode request control packet in the following time slots. When the master station receives the robust communication mode request control packet, it needs to send a robust communication mode switch confirmation control packet to the slave station, and then the master station and the slave station switch to the robust communication mode at the same time. Both the robust communication mode switch request and robust communication mode switch confirmation are sent using the robust communication mode.

Fig. 4 shows an example diagram of a binary sequence indication by using on-off keying of a preamble signal in the embodiment; and in the robust communication mode of the present invention, information is transmitted by using the on-off keying of preamble signals in the corresponding time slots. Without the loss of generality, the presence of the preamble signal (ON) represents the transmission of binary data "1", and the absence (OFF) of the preamble signal represents the transmission of binary data "0".

Fig. 5 shows an example diagram of PHY data burst structure in the robust communication mode in the embodiment; the PHY data burst starts with a robust communication mode enable signal, which is used for the burst/timing synchronization, and also marks the start of a PHY data burst. The PHY burst has a short PHY header, which may contain the following information: a node identifier (which can be 8 bits in the embodiment), a PHY payload length (which can be 10 bits in the embodiment), a PHY parameter (which can be 2 bits in the embodiment), and reservation information (which can be 4 bits in the embodiment). In the embodiment, FEC and 8-bit CRC encoding are used for the PHY header.

The preamble sequence following the PHY header represents the PHY payload. The length of the PHY payload is variable, the specific value thereof is indicated in the payload length domain in the PHY header, but the maximum length is determined by the master station according to the working frequency and the MAC frame structure. In addition, in the present invention, a 32-bit CRC code is further used for the payload. Although the detection of the presence or absence of the preamble is relatively robust, the present invention further uses a less redundant FEC code, such as a convolutional code with code rate of 3/4 and constraint length of 7, in order to correct a small number of burst errors in the PHY block.

Assuming that $T_{prmbl}$ represents the duration of the preamble signal, since each preamble signal carries 1 bit information, the maximum data rate $R_{rm}$ of the robust communication mode is denoted as follows:

$$R_{rm} \leq 1/T_{prmbl}$$

The length of the preamble $T_{prmbl}$ is determined by the bandwidth of the default communication mode. The larger the bandwidth, the shorter the preamble length is. Table 1 shows the preamble lengths and the corresponding maximum data rates for different bandwidths. Due to the coding overhead and PHY overhead, the actual PHY data rate is less than $R_{rm}$.

Table 1 preamble lengths and corresponding maximum data rates of different bandwidths

| Bandwidth [MHz] | Preamble length [ms] | Maximum data rate [kbps] |
| --- | --- | --- |
| 5 | 0.01536 | 65.10 |
| 2.5 | 0.03072 | 32.55 |
| 1.25 | 0.06144 | 16.28 |
| 0.625 | 0.12288 | 8.14 |
| 0.078125 | 0.06144 | 1.02 |

In the robust communication mode, the master station still periodically sends the beacon signal. The slave station detects the beacon signal to evaluate the link quality for the default communication mode. The determining method is as follows: We define the error rate of the reception of the beacon signals as the ratio between the number of incorrectly received beacon signals and the number of total sent beacon signals. If the error rate is below a predefined threshold, it implies that the communication quality of the default communication mode can meet the requirements, and vice versa. If the default communication mode can work effectively, the slave station may initiate a process to switch back to the default communication mode. Upon the reception of the switch request from the slave station, the master station decides whether or not to switch back. In addition, it is possible that the master station and the slave station use both the default communication mode and the robust communication mode at the same time. The master station decides whether to use one mode or use the two modes simultaneously.

In the method of the present invention, the master station needs to periodically send the beacon signal in the default communication mode, the slave station synchronizes with the master station by receiving the beacon signal and establishes a communication link with the master station. In the robust communication mode, the slave station calculates the error rate of received beacon signal, and evaluates whether the default communication mode can work effectively or not.

In the default communication mode, the master station communicates with the slave station through a PHY data burst including the preamble signal and the OFDM symbols, and the data carried in the OFDM symbols is coded by forward error correction and cyclic redundancy check; and

in the robust communication mode, the master station and the slave station transmit data by using on-off keying of the preamble signal, the presence (ON) of the preamble signal represents binary data 1, and the absence (OFF) of the preamble signal represents binary data 0.

The information of the PHY data burst includes a PHY header containing PHY control information and a PHY payload containing upper layer application data, both the PHY header and the PHY payload are coded by an FEC and CRC code.

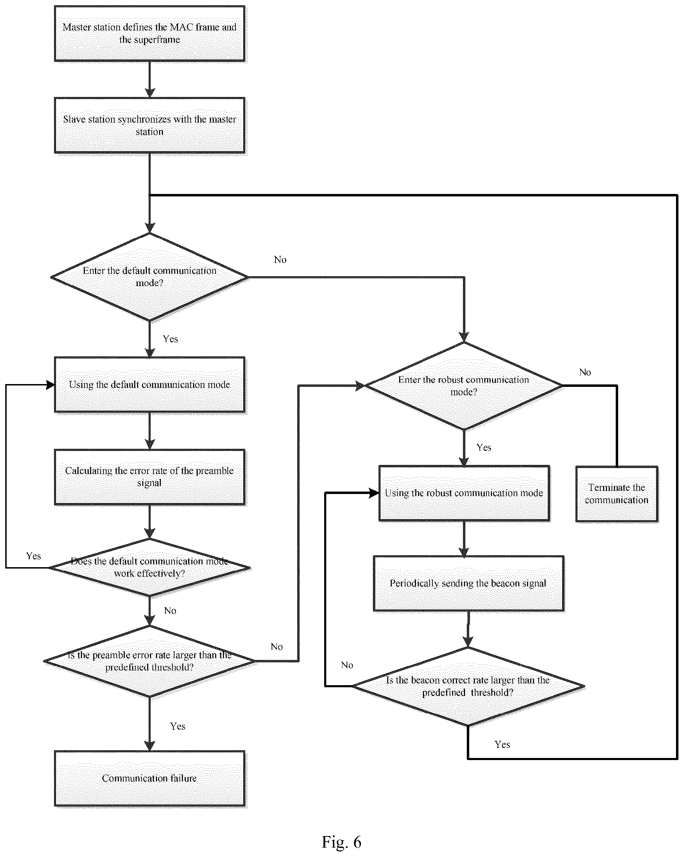

Fig. 6 shows the flowchart of a power-line carrier communication method of the present invention; by adopting the power-line carrier communication method provided by the present invention, the system can communicate either in the default communication mode or in the robust communication mode, and can switch from the default communication mode to the robust communication mode and vice versa. The power-line carrier communication method provided by the present invention specifically includes the following steps:

step 1, the master station defines the MAC frame, the beacon signal, the MAC superframe and the robust communication mode enable signal, and it sends the beacon signal at the start of the MAC frame, and sends the robust communication mode enable signal after the first beacon signal of the MAC superframe;

step 2, the slave station attempts to detect the beacon signal and communicates with the master station in the default communication mode, step 3 is executed in the case of success, and otherwise, step 4 is executed;

step 3, in the default communication mode, the slave station calculates the error rate of the reception of preamble signal in the received beacon signal; if the default communication mode does not workproperly, then the error rate of the reception of the preamble signal is below a predefined threshold, step 4 is executed; otherwise, it indicates that the communication environment is very harsh, and the communication cannot be carried in both the default communication mode and the robust communication mode;

step 4, the slave station attempts to enter the robust communication mode, and in the case of success, communicates by the on-off keying of the preamble signal and step 5 is executed;

step 5, the master station and the slave station communicate in the robust communication mode; the master station further periodically sends the beacon signal in the default communication mode; the slave station evaluates the quality of the beacon signal to determine whether the default communication mode can work effectively; in case of yes, the master station and the slave station may agree to switch back to the default communication mode.

In the step 1, the beacon signal includes the preamble signal and the OFDM signal; and both the preamble signal and the robust communication mode enable signal are specially designed preamble signals containing 384 sampling points.

Fig. 1 shows the MAC frame defined by the master station in the present invention, the MAC frame including the transmission time for the beacon signal and the reserved time for communication data.

At the start of the communication, the master station sends the beacon signal at the start of the MAC frame, which has the same structure as that of the PHY data burst and includes a preamble signal and one or more OFDM signals as shown in Fig. 2.

The OFDM symbol of the beacon signal carries MAC control information, and the MAC control information includes information of network access control management of an MAC layer.

The MAC superframe includes a transmission time for the beacon signal, a transmission time for the robust communication mode enable signal, a time reserved in which the slave station can send a mode switch request of switching from the default communication mode to the robust communication mode and also the master station can confirm the mode switch request, and some MAC frames.

In the step 2, the slave station powers on, the master station sends the beacon signal and the robust communication mode enable signal, and the slave station detects the beacon signal to synchronize with the master station; and if the slave station can detect both the preamble signal and the OFDM symbol of the beacon signal, the communication is successful, the default communication mode can be used, and the step 3 is executed; and if the slave station can only detect the preamble signal but cannot detect the OFDM symbol of the beacon signal, the step 4 is executed.

Further, in the step 3, when the communication is carried out in the default communication mode, to prepare for the use of the robust communication mode, the slave station calculates the error rate of the preamble signal in the beacon signal and evaluates the communication reliability of the robust communication mode.

In the step 4, if the master station fails to establish communication with the slave station through the default communication mode, the slave station detects the robust communication mode enable signal at the start of the MAC superframe and sends a robust communication mode switch request control packet; and

if the master station receives the robust communication mode switch request control packet sent by the slave station, it will send a robust communication mode switch confirmation control packet to the slave station using the robust communication mode; and the master station and the slave station exchange data information through the robust communication mode.

In the method provided by the present invention, if the communication environment is good, the master station can select to communicate with the slave station by using the default communication mode or the robust communication mode.

If the communication environment is extremely bad, switching from the default communication mode to the robust communication mode can be achieved under appropriate conditions, and the basis of switching from the default communication mode to the robust communication mode is as follows:

Since the successful detection of the preamble signal is a prerequisite for the successful detection of the following data symbols, the channel quality that the preamble can tolerate is much worse than the channel quality that the OFDM symbol can tolerate. Therefore, when the slave station can correctly detect the preamble signal but cannot reliably detect the data symbol, the slave station can switch to the robust communication mode and complete the communication just using the preamble signal.

Switching from the default communication mode to the robust communication mode can be carried out in the following case:

Since the master station periodically sends the beacon in the default communication mode, the slave station can evaluate the communication reliability of the preamble by calculating the error rate of the preamble detection. If the error rate of the preamble is less than a predefined threshold, the slave station can decide to switch to the robust communication mode.

Finally, it should be noted that the above-mentioned embodiments are merely used for illustrating the technical solutions of the present invention, rather than limiting them; although the present invention has been described in detail with reference to the foregoing embodiments, those of ordinary skill in the art should understand that they could still make modifications or equivalent substitutions to the specific implementations of the present invention, and any modifications or equivalent substitutions not departing from the spirit and scope of the present invention shall all fall within the scope of the claims of the present invention.

**Claims**

1. A power line communication method, **characterized in that** it comprises the following steps:

   I. a master station defines an MAC frame, a beacon signal, an MAC superframe and a robust communication mode enable signal, sends the beacon signal at the start of a MAC frame, and sends the robust communication mode enable signal after the initial beacon signal of the MAC superframe;
   II. a slave station attempts to communicate with the master station in a default communication mode, step III is executed in the case of success, and otherwise, step IV is executed;
   III. the slave station calculates an error rate of the detection of the preamble signal in the beacon signal, and in case the default communication mode can not work, if the error rate of the preamble signal is less than a predefined threshold, step IV is executed;
   IV. the slave station attempts to enter the robust communication mode, and in the case of success, the data communication is carried out by using the on-off keying of the preamble signal and step V is executed; and
   V. the master station periodically sends the beacon signal in the default communication mode, the slave station estimates whether the default communication can provide satisfactory link quality, and if yes, the master station selects the communication mode.

2. The method of claim 1, wherein in the step I, the beacon signal contains the preamble signal and OFDM symbols carrying control information;
   the MAC frame contains a time slot for the transmission of the beacon signal and a reserved time slot for transmitting communication data;
   the MAC superframe contains a time slot for the transmission of the beacon signal, a time slot for the transmission of the robust communication mode enable signal, a time slot reserved in which the slave station can send a mode switch request of switching from the default communication mode to the robust communication mode and also the master station can confirm the mode switch request, and some MAC frames; and
   the duration of a MAC frame is the sum of the transmission time for the beacon signal, the transmission time for the robust communication mode enable signal, the transmission time reserved in which the slave station can send the mode switch request of switching from the default communication mode to the robust communication mode and also the master station can confirm the mode switch request.

3. The method of claim 1, wherein the step II comprises the following steps: the slave station powers on, detects the beacon signal and synchronizes with the master station; and
   if the slave station detects both the preamble signal and the OFDM symbol in the beacon signal, it means the communication is successful and the default communication mode could be used, and the step III is executed; and
   if the slave station can only detect the preamble signal but cannot detect the OFDM symbol in the beacon signal, the step IV is executed.

**4.** The method of claim 1, wherein in the step III, when the default communication mode is used, to prepare for the use of robust communication mode, the slave station calculates the error rate of the preamble signal in the beacon signal and evaluates the communication reliability of the robust communication mode; and
in case the default communication mode can not work, if the error rate of the preamble signal is below the predefined threshold, the step IV is executed.

**5.** The method of claim 1, wherein the step IV comprises the following steps: if the master station fails to establish communication with the slave station using the default communication mode, the slave station detects the robust communication mode enable signal at the start of the MAC superframe and sends a robust communication mode switch request control packet;
if the master station receives the robust communication mode switch request control packet sent by the slave station, and responds with send a robust communication mode switch confirmation control packet to the slave station using the robust communication mode; and
the master station and the slave station exchange data information using the robust communication mode.

**6.** The method of claim 1 or 5, wherein when the master station communicates with the slave station using the robust communication mode, the master station still needs to periodically send the beacon signal, and the slave station detects the beacon signal to evaluate link quality in the default communication mode.

**7.** The method of claim 1, wherein when both the default communication mode and the robust communication mode can work effectively, the master station determines which mode shall be used or even decides to use both communication modes simultaneously.

**8.** The method of claim 1, wherein the master station periodically sends the beacon signal, and the slave station receives the beacon signal to synchronize and thus to establish the communication with the master station;
in the default communication mode, the master station communicates with the slave station through a PHY data burst comprising a preamble signal and OFDM symbols, and the data carried in the OFDM symbols is protected by a forward error correct code and cyclic redundancy code; and
in the robust communication mode, the master station and the slave station transmit data by the on-off keying of the preamble signal, the presence of the preamble signal represents binary data 1, and the absence of the preamble signal represents binary data 0.

**9.** The method of claim 1, wherein the PHY data is encoded data, which comprises PHY header carrying PHY control information and PHY payload carrying upper layer application data.

**Patentansprüche**

**1.** Verfahren zur Stromleitungskommunikation, **dadurch gekennzeichnet, dass** es die folgenden Schritte umfasst:

I. eine Master-Station definiert einen MAC-Frame, ein Beacon-Signal, einen MAC-Superframe und ein Einschaltsignal für den robusten Kommunikationsmodus, sendet das Beacon-Signal am Anfang eines MAC-Frames und sendet das Einschaltsignal für den robusten Kommunikationsmodus nach dem initialen Beacon-Signal des MAC-Superframes;
II. eine Slave-Station versucht mit der Master-Station in einem Standardkommunikationsmodus zu kommunizieren, wobei in dem Fall eines Erfolgs Schritt III ausgeführt und andernfalls Schritt IV ausgeführt wird;
III. die Slave-Station berechnet eine Fehlerrate des Erkennens des Präambelsignals in dem Beacon-Signal, und wobei in dem Fall, dass der Standard-Kommunikationsmodus nicht funktioniert, falls die Fehlerrate des Präambelsignals kleiner als ein vordefinierter Schwellenwert ist, Schritt IV ausgeführt wird;
IV. die Slave-Station versucht in den robusten Kommunikationsmodus einzutreten, wobei in dem Fall eines Erfolgs, die Datenkommunikation unter Verwendung von On-Off-Keying des Präambelsignals durchgeführt und Schritt V ausgeführt wird, und
V. die Master-Station sendet periodisch das Beacon-Signal im Standardkommunikationsmodus, wobei die Slave-Station schätzt, ob die Standardkommunikation eine ausreichende Verbindungsqualität bereitstellen kann, und falls ja,
die Master-Station den Kommunikationsmodus auswählt.

**2.** Verfahren nach Anspruch 1, wobei in dem Schritt I das Beacon-Signal das Präambelsignal und OFDM-Symbole enthält, die Steuerinformationen transportieren;

der MAC-Frame ein Zeitfenster für die Übermittlung des Beacon-Signals und ein reserviertes Zeitfenster zum Übermitteln von Kommunikationsdaten enthält;

der MAC-Superframe ein Zeitfenster für die Übermittlung des Beacon-Signals, ein Zeitfenster für die Übermittlung des Einschaltsignals für den robusten Kommunikationsmodus, ein reserviertes Zeitfenster, in welchem die Slave-Station eine Modusumschaltanfrage zum Umschalten von dem Standardkommunikationsmodus in den robusten Kommunikationsmodus senden kann und die Master-Station die Modusumschaltanfrage bestätigen kann, und einige MAC-Frames enthält; und

die Dauer eines MAC-Frames die Summe der Übermittlungszeit für das Beacon-Signal, der Übermittlungszeit für das Kommunikationsmodus-Einschaltsignal und die reservierte Übermittlungszeit ist, in welcher die Slave-Station Station eine Modusumschaltanfrage zum Umschalten von dem Standardkommunikationsmodus in den robusten Kommunikationsmodus senden kann und die Master-Station die Modusumschaltanfrage bestätigen kann.

3. Verfahren nach Anspruch 1, wobei der Schritt II die folgenden Schritte umfasst: die Slave-Station fährt hoch, erkennt das Beacon-Signal und synchronisiert sich mit der Master-Station;
und
falls die Slave-Station beide des Präambelsignals und des OFDM-Symbols in dem Beacon-Signal erkennt, bedeutet es, dass die Kommunikation erfolgreich ist und der Standardkommunikationsmodus verwendet werden könnte, und Schritt II ausgeführt wird; und falls die Slave-Station nur das Präambelsignal erkennen kann, aber nicht das OFDM-Signal in dem Beacon-Signal erkennt, Schritt IV ausgeführt wird.

4. Verfahren nach Anspruch 1, wobei in dem Schritt III, wenn der Standardkommunikationsmodus verwendet wird, um die Verwendung des robusten Kommunikationsmodus vorzubereiten, die Slave-Station die Fehlerrate des Präambelsignals in dem Beacon-Signal berechnet und die Kommunikationszuverlässigkeit des robusten Kommunikationsmodus bewertet, und
falls der Standkommunikationsmodus nicht funktioniert, wenn die Fehlerrate des Präambelsignals unter dem vorbestimmten Schwellenwert liegt, der Schritt IV ausgeführt wird.

5. Verfahren nach Anspruch 1, wobei der Schritt IV die folgenden Schritte umfasst: falls es der Master-Station nicht gelingt, eine Kommunikation mit der Slave-Station unter Verwendung des Standardkommunikationsmodus einzurichten, erkennt die Slave-Station das Einschaltsignal für den robusten Kommunikationsmodus am Anfang des MAC-Superframes und sendet ein Umschaltanfragensteuerpaket für den robusten Kommunikationsmodus;
falls die Master-Station das von der Slave-Station gesendete Umschaltanfragensteuerpaket für den robusten Kommunikationsmodus empfängt, antwortet sie mit dem Senden eines Umschaltbestätigungssteuerpaket für den robusten Kommunikationsmodus an die Slave-Station unter Verwendung des robusten Kommunikationsmodus;
die Master-Station und die Slave-Station tauschen Dateninformationen unter Verwendung des robusten Kommunikationsmodus aus.

6. Verfahren nach Anspruch 1 oder 5, wobei, wenn die Master-Station mit der Slave-Station unter Verwendung des robusten Kommunikationsmodus kommuniziert, die Master-Station weiterhin das periodische Senden des Beacon-Signals erfordert und die Slave-Station das Beacon-Signal erkennt, um die Verbindungsqualität in dem Standardkommunikationsmodus zu bewerten.

7. Verfahren nach Anspruch 1, wobei, wenn beide des Standardkommunikationsmodus und des robusten Kommunikationsmodus effektiv funktionieren können, die Master-Station bestimmt, welcher Modus verwendet werden soll oder sogar entscheidet, beide Kommunikationsmodi gleichzeitig zu verwenden.

8. Verfahren nach Anspruch 1, wobei die Master-Station periodisch das Beacon-Signal sendet und die Slave-Station das Beacon-Signal empfängt, um sich zu synchronisieren und damit die Kommunikation mit der Master-Station einzurichten;
wobei in dem Standardkommunikationsmodus die Master-Station mit der Slave-Station durch einen PHY-Datenburst kommuniziert, der ein Präambelsignal und OFDM-Symbole umfasst, und die Daten, die in den OFDM-Symbolen transportiert werden, durch einen Vorwärtsfehlerkorrekturcode und einen zyklischen Redundanzcode geschützt sind; und
wobei in dem robusten Kommunikationsmodus die Master-Station und die Slave-Station Daten durch On-Off-Keying des Präambelsignals übermitteln, wobei die Anwesenheit des Präambelsignals das binäre Datum 1 und die Abwesenheit des Präambelsignals das binäre Datum 0 darstellt.

**9.** Verfahren nach Anspruch 1, wobei die PHY-Daten kodierte Daten sind, die einen PHY-Header, der PHY-Steuerinformationen transportiert, und PHY-Nutzlast umfassen, die Anwendungsdaten der oberen Schicht transportiert.

**Revendications**

**1.** Procédé de communication par ligne électrique, **caractérisé en ce qu'**il comprend les étapes suivantes :

I. une station maîtresse définit une trame MAC, un signal de balise, une supertrame MAC et un signal de validation de mode de communication robuste, envoie le signal de balise au début d'une trame MAC, et envoie le signal de validation de mode de communication robuste après le signal de balise initial de la supertrame MAC ;
II. une station esclave tente de communiquer avec la station maîtresse dans un mode de communication par défaut, l'étape III est exécutée en cas de succès, et autrement, l'étape IV est exécutée ;
III. la station esclave calcule un taux d'erreur de la détection du signal de préambule dans le signal de balise, et dans le cas où le mode de communication par défaut ne peut pas fonctionner, si le taux d'erreur du signal de préambule est inférieur à un seuil prédéfini, l'étape IV est exécutée ;
IV. la station esclave tente d'entrer dans le mode de communication robuste, et en cas de succès, la communication de données est effectuée par l'utilisation de la modulation par tout ou rien du signal de préambule et l'étape V est exécutée ; et
V. la station maîtresse envoie périodiquement le signal de balise dans le mode de communication par défaut, la station esclave estime si la communication par défaut peut fournir une qualité de liaison satisfaisante, et, si oui, la station maîtresse sélectionne le mode de communication.

**2.** Procédé selon la revendication 1, dans lequel, à l'étape I, le signal de balise contient le signal de préambule et des symboles OFDM portant les informations de commande ;
la trame MAC contient un créneau temporel pour la transmission du signal de balise et un créneau temporel réservé pour la transmission de données de communication ;
la supertrame MAC contient un créneau temporel pour la transmission du signal de balise, un créneau temporel pour la transmission du signal de validation de mode de communication robuste, un créneau temporel réservé dans lequel la station esclave peut envoyer une requête de commutation de mode de commutation du mode de communication par défaut au mode de communication robuste et également la station maîtresse peut confirmer la requête de commutation de mode, et certaines trames MAC ; et
la durée d'une trame MAC est la somme du temps de transmission pour le signal de balise, le temps de transmission pour le signal de validation de mode de communication robuste, le temps de transmission réservé dans lequel la station esclave peut envoyer la requête de commutation de mode de commutation du mode de communication par défaut au mode de communication robuste et également la station maîtresse peut confirmer la requête de commutation de mode.

**3.** Procédé selon la revendication 1, dans lequel l'étape II comprend les étapes suivantes :

la station esclave s'active, détecte le signal de balise et se synchronise avec la station maîtresse ;
et
si la station esclave détecte à la fois le signal de préambule et le symbole OFDM dans le signal de balise, cela signifie que la communication a réussi et que le mode de communication par défaut pourrait être utilisé, et l'étape III est exécutée ; et si la station esclave peut uniquement détecter le signal de préambule mais ne peut pas détecter le symbole OFDM dans le signal de balise, l'étape IV est exécutée.

**4.** Procédé selon la revendication 1, dans lequel, à l'étape III, lorsque le mode de communication par défaut est utilisé, pour se préparer pour l'utilisation du mode de communication robuste, la station esclave calcule le taux d'erreur du signal de préambule dans le signal de balise et évalue la fiabilité de communication du mode de communication robuste ;
et
dans le cas où le mode de communication par défaut ne peut pas fonctionner, si le taux d'erreur du signal de préambule est inférieur au seuil prédéfini, l'étape IV est exécutée.

**5.** Procédé selon la revendication 1, dans lequel l'étape IV comprend les étapes suivantes :

si la station maîtresse échoue à établir la communication avec la station esclave à l'aide du mode de communication par défaut, la station esclave détecte le signal de validation de mode de communication robuste au début de la supertrame MAC et envoie un paquet de commande de requête de commutation de mode de communication robuste ;

si la station maîtresse reçoit le paquet de commande de requête de commutation de mode de communication robuste envoyé par la station esclave, et répond avec l'envoi d'un paquet de commande de confirmation de commutation de mode de communication robuste à la station esclave à l'aide du mode de communication robuste ; et

la station maîtresse et la station esclave échangent des informations de données à l'aide du mode de communication robuste.

6. Procédé selon la revendication 1 ou 5, dans lequel, lorsque la station maîtresse communique avec la station esclave à l'aide du mode de communication robuste, la station maîtresse a encore besoin d'envoyer périodiquement le signal de balise, et la station esclave détecte le signal de balise pour évaluer la qualité de liaison dans le mode de communication par défaut.

7. Procédé selon la revendication 1, dans lequel, lorsque le mode de communication par défaut et le mode de communication robuste peuvent fonctionner efficacement, la station maîtresse détermine quel mode doit être utilisé, ou décide même d'utiliser les deux modes de communication simultanément.

8. Procédé selon la revendication 1, dans lequel la station maîtresse envoie périodiquement le signal de balise, et la station esclave reçoit le signal de balise pour synchroniser et ainsi pour établir la communication avec la station maîtresse ;

dans le mode de communication par défaut, la station maîtresse communique avec la station esclave à travers une rafale de données PHY comprenant un signal de préambule et des symboles OFDM, et les données transportées dans les symboles OFDM sont protégées par un code de correction d'erreur directe et un code de redondance cyclique ; et

dans le mode de communication robuste, la station maîtresse et la station esclave transmettent des données par la modulation par tout ou rien du signal de préambule, la présence du signal de préambule représente des données binaires 1, et l'absence du signal de préambule représente des données binaires 0.

9. Procédé selon la revendication 1, dans lequel les données PHY sont des données encodées qui comprennent un en-tête de PHY portant des informations de commande PHY et des données utiles PHY portant des données d'application de couche supérieure.

EP 3 185 430 B1

MAC frame | MAC frame

Beacon signal | | Beacon signal |

Fig. 1

PHY data burst

Preamble signal | OFDM symbols

Fig. 2

MAC superframe

MAC frame | Nth MAC frame

Beacon | | | Beacon | | ...... | Beacon |

Robust mode
enable signal

Fig. 3

1 | | | 1 | 1 | | 1 | | 1 |

Preamble signal | | | Preamble signal | Preamble signal | | Preamble signal | | Preamble signal |

Fig. 4

| Robust communication mode enable signal | PHY header with FEC | 8-bit CRC | (0-N) bytes payload with FEC | 32-bit CRC |

Fig. 5

13

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 201310478479 A

- US 2014105313 A1, Kim IL HAN